Europäisches Patentamt

European Patent Office

Office européen des brevets

(11) Numéro de publication: **0 486 346 B1**

(12) **FASCICULE DE BREVET EUROPEEN**

(45) Date de publication de fascicule du brevet: **12.10.94** (51) Int. Cl.5: **B64G 7/00**

(21) Numéro de dépôt: **91402842.8**

(22) Date de dépôt: **24.10.91**

(54) **Procédé et dispositif de pilotage permettant de soumettre une charge portée par un aérodyne à une microgravité de grande qualité.**

(30) Priorité: **15.11.90 FR 9014203**

(43) Date de publication de la demande:
**20.05.92 Bulletin 92/21**

(45) Mention de la délivrance du brevet:
**12.10.94 Bulletin 94/41**

(84) Etats contractants désignés:
**DE GB IT**

(56) Documents cités:
**DE-A- 3 803 712**
**US-A- 4 408 740**

**Workshop on Microgravity Experimentation in Air-craft and Rockets. NationalResearch Council of Canada, Ottawa (Ontario), Space Division, 1988 GARNEAU M.**

**"Parabolic flight: a useful test-bed"**

(73) Titulaire: **SEXTANT AVIONIOUE S.A.**
**Immeuble le Galilée**
**Parc Tertiaire de Meudon**
**5/7 rue Jeanne Braconnier**
**F-92366 Meudon la Forêt Cédex (FR)**

(72) Inventeur: **Sainthuile, Gérard**
**14, Allée de Chiraz Bois Persan**
**F-91400 Orsay (FR)**

(74) Mandataire: **de Saint-Palais, Arnaud Marie et al**
**CABINET MOUTARD**
**35, Avenue Victor Hugo**
**F-78960 Voisins le Bretonneux (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention concerne un procédé et un dispositif de pilotage permettant de soumettre une charge portée par un aérodyne à un état de microgravité de grande qualité.

D'une manière générale, on sait que les vols paraboliques permettent d'obtenir à bon marché, à bord d'un aérodyne tel que, par exemple un avion, une microgravité raisonnable, de l'ordre de 50 mg pendant près de 25 secondes.

Cette technique qui permet d'effectuer des expériences scientifiques sans recours aux véhicules spatiaux très coûteux, implique une séquence de pilotage comprenant les phases suivantes :
- mise de l'aérodyne en palier stabilisé à sa vitesse maximale opérationnelle,
- réalisation d'une ressource à facteur de charge vertical maximal, les moteurs étant à poussée maximale (une ressource étant une évolution dans laquelle la force centrifuge est maintenue dans le plan de symétrie de l'aérodyne, ici un plan vertical),
- réalisation d'une "injection", lorsque l'aérodyne atteint une assiette de tangage déterminée $\theta_1$, par exemple de 45° (ou l'incidence de décrochage), cette injection étant effectuée :
  . à facteur de charge vertical aérodyne nul, en ajustant l'assiette longitudinale par la gouverne de profondeur,
  . à facteur de charge longitudinal aérodyne nul, en ajustant la poussée moteurs, et
  . à facteur de charge latéral nul, en ajustant les gouvernes de direction et de roulis.

Les trois composantes du vecteur facteur de charge de l'aérodyne étant nulles, l'aérodyne n'est plus soumis qu'à la pesanteur. Il décrit ainsi dans le plan vertical une parabole dont les caractéristiques sont déterminées par la vitesse et la pente de l'aérodyne au moment de l'injection et dont le sommet est l'altitude maximale opérationnelle de l'aérodyne, l'altitude de départ de la ressource d'entrée ayant été calculée en conséquence.

Lorsque, à la fin de la trajectoire parabolique, l'assiette de tangage atteint une valeur $\theta_2$, par exemple de -45°, l'aérodyne effectue une ressource de sortie :
- a facteur de charge vertical aérodyne maximal,
- avec la poussée des moteurs au ralenti-vol.

Arrivé au voisinage de l'altitude de départ des vols paraboliques, l'aérodyne se remet en palier en tenant sa vitesse maximale opérationnelle, prêt pour un nouveau vol parabolique.

En théorie, dans l'intervalle compris entre l'injection d'entrée et l'injection de sortie, l'aérodyne ainsi que les différentes charges qu'il renferme, effectuent un vol balistique, au cours duquel la résultante des forces de surface est nulle.

En fait, compte tenu des différentes perturbations auxquelles l'aérodyne se trouve soumis et qui demeurent mal maîtrisées (en particulier des forces aérodynamiques s'exerçant sur l'aérodyne), ce procédé ne permet pas d'atteindre une précision élevée : la charge qui est maintenue solidaire de l'aérodyne est notamment soumise aux forces de surfaces induites par les oscillations de l'aérodyne autour de son centre de gravité et autour de la trajectoire parabolique. La précision d'apesanteur est alors de l'ordre de 50 mg.

L'invention a donc plus particulièrement pour but de supprimer cet inconvénient en ramenant le seuil à $5.10^{-3}$ g.

Pour parvenir à ce résultat, le procédé selon l'invention propose de désolidariser de l'aérodyne le matériel expérimental qui constitue la charge, de la façon décrite dans le document ""Workshop on Microgravity Experiments in Aircraft and Rockets, National Research Council of Canada, Ottawa (Ontario), Space division, 1988 ; GARNEAU M. : "Parabolic flight : a useful test-bed", de manière à ce qu'à la suite de la susdite injection, cette charge puisse suivre une trajectoire parabolique indépendante de celle de l'aérodyne.

Selon l'invention, ce procédé est caractérisé en ce qu'il consiste à déterminer l'écart entre la position de la charge et celle de l'aérodyne, et à piloter l'aérodyne de manière à maintenir cet écart à une valeur déterminée fixe ou variable dans le temps au cours de ladite trajectoire parabolique.

L'intérêt de cette solution réside dans le fait que, contrairement à l'aérodyne, la charge, une fois désolidarisée de l'aérodyne, n'est que très peu sujette à des perturbations et suit, en conséquence, une trajectoire parabolique relativement précise qu'il est possible de simuler à partir de conditions initiales (vitesse et pente) déterminées au moment de l'injection, par exemple par une centrale inertielle.

Il suffit alors d'être capable de mesurer l'écart entre la position de l'aérodyne et celle de la charge et de maintenir ensuite cet écart à une valeur prédéterminée.

En fait, ce pilotage a pour conséquence de maintenir l'aérodyne sur une trajectoire parabolique légèrement décalée par rapport à celle de la charge, de manière à ce que celle-ci demeure le plus longtemps possible à distance des parois intérieures de l'aérodyne (entre le plancher et le plafond).

La détermination de la position relative de l'aérodyne par rapport à la charge est assurée par un calculateur à partir des facteurs de charge instantanés (vertical, longitudinal et latéral), en axe aérodyne, mesurés, par exemple par un bloc accélérométrique triaxe, à l'endroit où est disposée la charge à maintenir en état de microgravité.

Un mode d'exécution d'un dispositif selon l'invention sera décrit ci-après, à titre d'exemple non limitatif, avec référence aux dessins annexés dans lesquels :

La figure 1 est une représentation schématique de la trajectoire d'un avion pendant les différentes phases d'un vol parabolique ;

La figure 2 est un schéma de principe d'un dispositif de pilotage mettant en oeuvre le procédé selon l'invention.

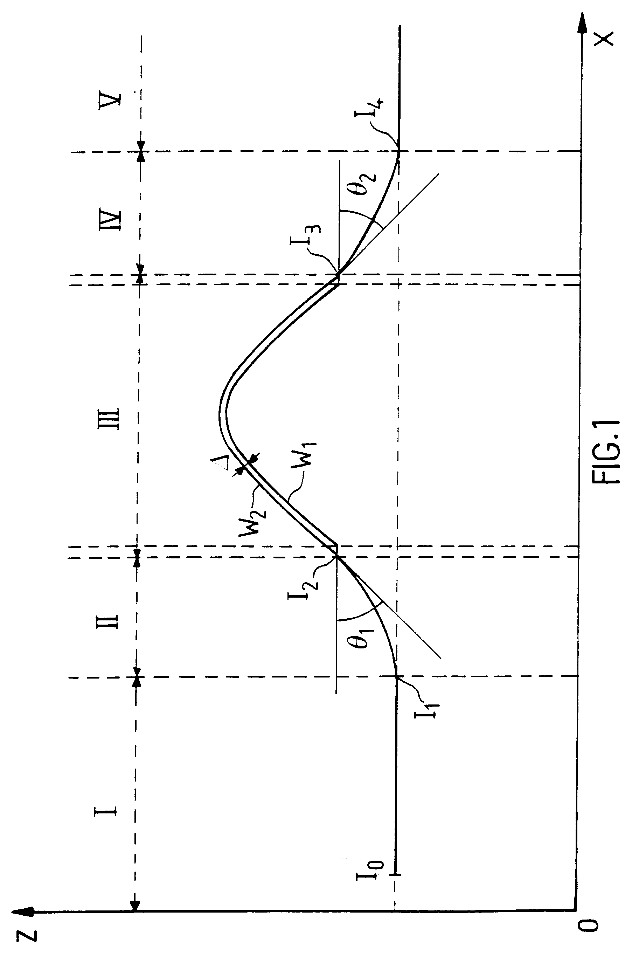

Sur la figure 1, les différentes phases de pilotage conduisant à l'obtention d'un vol parabolique ont été indiquées en chiffres romains, en relation avec la trajectoire de l'avion dans un plan vertical ZOX.

Comme précédemment mentionné, au cours de la première phase I, l'avion évolue en palier à sa vitesse maximale opérationnelle.

A l'instant $I_1$, l'avion effectue une ressource (phase II) à facteur de charge vertical maximal, les moteurs étant à la poussée maximale. Au cours de cette phase II, le facteur de charge vertical s'élève par exemple à 2 g. La trajectoire de l'avion qui était précédemment horizontale s'incurve alors vers le haut jusqu'à un instant $I_2$ qui correspond à une assiette de tangage $\theta_1$. A cet instant $I_2$, est effectuée une injection en vue d'amorcer la phase III de vol parabolique de l'avion. Cette injection est obtenue en annulant les facteurs de charge (vertical, longitudinal et latéral) de l'avion grâce à une action appropriée sur la gouverne de profondeur, sur la poussée moteur et sur les gouvernes de direction et de roulis.

En fait, contrairement aux techniques classiques, au moment de l'injection $I_2$, on effectue en outre une action tendant à décaler la trajectoire de l'avion $W_1$ par rapport à sa trajectoire parabolique théorique $W_2$ : Il s'agit de faire en sorte que la charge qui repose initialement sur le plancher de l'avion, se désolidarise de celui-ci, ne subisse plus, au cours de la phase III, les perturbations auxquelles l'avion se trouve soumis et qu'elle puisse donc suivre la parabole théorique $W_2$.

En pratique, l'écart $\Delta$ entre les trajectoires $W_1$ et $W_2$ est déterminé de manière à ce que la charge se dispose au centre d'un volume libre déterminé à l'intérieur de l'avion et sans contact avec celui-ci.

Au cours du vol parabolique (phase III), l'avion est piloté de manière à ce que l'écart $\Delta$ entre les deux trajectoires $W_1$, $W_2$ demeure constant et, qu'en conséquence, la charge ne vienne pas heurter les parois de l'avion.

Lorsqu'à la fin de la trajectoire parabolique (phase III) l'assiette de tangage atteint une valeur $\theta_2$ (instant $I_3$), l'avion effectue une ressource de sortie (phase IV) de manière à se remettre en palier (phase V), cette ressource étant faite :

- à facteur de charge vertical avion maximal,
- avec la poussée des moteurs au ralenti vol.

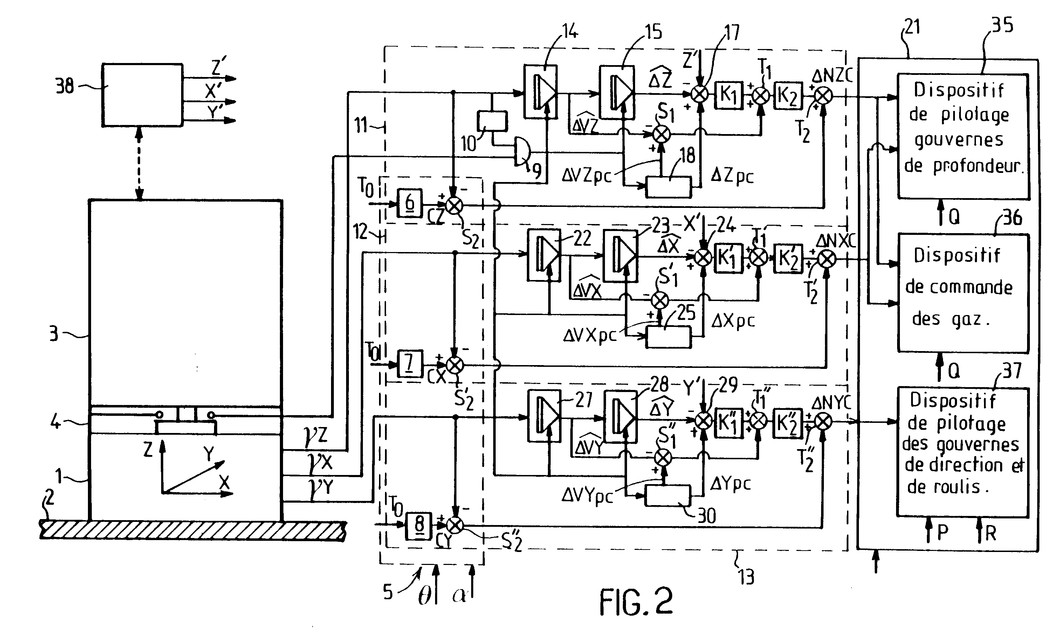

Pour pouvoir effectuer un vol parabolique tel que précédemment défini, le dispositif selon l'invention fait intervenir une centrale accélérométrique de précision 1, placée sur le plancher 2 du fuselage de l'avion, à l'endroit où est posé le matériel expérimental 3 qui constitue la charge (figure 2). Cette centrale accélérométrique 1 qui peut comprendre, de façon classique, trois accéléromètres dont les axes forment un trièdre trirectangle, est destinée à mesurer les facteurs de charge vertical $\gamma Z$, longitudinal $\gamma X$ et latéral $\gamma Y$. En outre, ce dispositif fait intervenir un détecteur 4 tel qu'un ou plusieurs micro-interrupteurs, placé sous la charge 3, de manière à pouvoir détecter l'instant où celle-ci, (phase III), s'écarte du plancher 2.

Par ailleurs, le dispositif représenté sur la figure 2 comporte un calculateur 5 incluant trois modules de calcul (blocs 6, 7 et 8) qui servent à engendrer, à partir d'un instant $I_0$ pour lequel l'avion est stabilisé en palier (phase I), des signaux de précommande CZ, CX, CY (en facteur de charge avion selon les axes Z, X et Y), qui permettront à l'avion d'effectuer les différentes phases I à V du vol parabolique.

Le signal fourni par le détecteur 4 qui est sous forme binaire (absence/présence de la charge sur le plancher), est transmis à l'une des entrées d'une porte ET 9, dont l'autre entrée est connectée à un dispositif (bloc 10) permettant de détecter le passage à zéro du facteur de charge vertical $\gamma Z$ mesuré par la centrale 1. Cette porte ET 9 émettra donc un signal de niveau logique 1 si, à la fois, la charge 3 s'est soulevée du plancher 2 de l'avion, et le facteur de charge est voisin de zéro (situation de sustentation libre "free-floating").

Comme précédemment mentionné, le but de l'invention est d'apporter une correction aux précommandes CZ, CY, CX engendrées par la partie classique du calculateur 5 de manière à maintenir la charge en sustentation libre, à l'intérieur de l'avion au cours de la phase III.

Cette correction s'effectue grâce à trois circuits similaires 11, 12, 13 qui, à partir des valeurs de facteurs de charge $\gamma X$, $\gamma Y$ et $\gamma Z$ fournis par la centrale 1, déterminent les valeurs correctives à apporter aux précommandes CX, CY et CZ, élaborées par le calculateur 5.

Le circuit 11 comprend un module d'intégration 14 initialisé par la porte ET 9, qui reçoit le signal $\gamma Z$ fourni par la centrale 1 et qui fournit un signal

$$\widehat{\Delta VZ}$$

représentatif de la valeur estimée de la vitesse verticale de l'avion par rapport à la charge 3.

Ce module d'intégration 14 est connecté, par sa sortie, d'une part, à un deuxième module d'intégration 15, également initialisé par la porte ET 9, qui fournit un signal ΔZ représentatif de la valeur estimée de la position verticale de l'avion par rapport à la charge 3, et, d'autre part, à l'une des deux entrées d'un soustracteur $S_1$. Ce soustracteur $S_1$ reçoit par ailleurs, sur son autre entrée, un signal de précommande de vitesse ΔVZpc engendré par un circuit de précommande 18 initialisé par la porte ET 9. Le signal

$$\widehat{\Delta z}$$

émanant du module d'intégration 15 est appliqué à l'une des entrées d'un soustracteur 17 dont la deuxième entrée reçoit un signal de précommande ΔZpc de la hauteur de l'avion par rapport à la charge 3. Ce signal de précommande ΔZpc, qui est engendré par le circuit 18, a pour but de faire en sorte que la charge 3 effectue, à l'intérieur du volume libre de l'avion, un parcours prédéterminé pour venir se placer et se maintenir en un endroit choisi de ce volume.

Le signal d'écart fourni par le soustracteur 17 convenablement amplifié (amplificateur $K_1$) est additionné (sommateur $T_1$) au signal d'écart engendré par le soustracteur $S_1$.

Le signal résultant de cette addition est appliqué, après amplification dans l'amplificateur $K_2$, à l'entrée d'un deuxième sommateur $T_2$ qui reçoit, par son autre entrée, un signal (CZ - γZ) fourni par un soustracteur $S_2$. Ce soustracteur $S_2$ reçoit sur ses deux entrées le signal de précommande CZ fourni par le module de calcul 6 et le signal de facteur de charge γZ fourni par la centrale 1.

Le signal ΔNZC issu du sommateur $T_2$ (qui représente le facteur de charge commande selon l'axe OZ) est alors appliqué au dispositif de pilotage 35 des gouvernes de profondeur du système de pilotage 21 de l'avion, (ce système pouvant comprendre un pilote automatique et/ou un ensemble cohérent de directeurs de vol).

Il apparaît donc que le signal ΔNZC résulte de la combinaison en cascade des termes de commande (CZ - γZ),

$$(\Delta VZpc - \widehat{\Delta VZ})$$

et

$$(\Delta Zpc - \widehat{\Delta z})$$

qui sont eux-mêmes déterminés à partir des valeurs estimées

$$\widehat{\gamma z}, \quad \widehat{\Delta VZ}$$

et

$$\widehat{\Delta z}.$$

Le circuit de commande 35 reçoit également un signal Q représentatif de la vitesse de tangage de l'avion ainsi que le signal ΔNXC fourni par le circuit 12. En fonction de ces trois signaux, il élabore les ordres de pilotage à transmettre aux servomoteurs des gouvernes de profondeur de l'avion et/ou vers un directeur de vol correspondant.

D'une façon identique, le circuit 12 comprend un module d'intégration 22 qui fournit, à partir du facteur de charge γX, une valeur estimée

$$\widehat{\Delta VX}$$

de la vitesse longitudinale de l'avion, d'une part, à un second module d'intégration 23 et à l'une des entrées d'un soustracteur $S'_1$ qui reçoit sur son autre entrée un signal de précommande de vitesse ΔVXpc engendré par un circuit de précommande 25 initialisé par la porte ET 9.

Le signal

$$\widehat{\Delta X}$$

produit par le module 23 est appliqué à l'une des deux entrées d'un soustracteur 24 qui reçoit par son autre entrée un signal de précommande ΔXpc de position longitudinale de l'avion par rapport à la charge 3.

Le signal d'écart produit par le soustracteur 24 et amplifié par un amplificateur $K'_1$ est additionné (sommateur $T'_1$) au signal d'écart engendré par le soustracteur $S'_1$.

Le signal résultant de cette addition est appliqué, après amplification dans un amplificateur $K'_2$, à l'entrée d'un sommateur $T'_2$ qui reçoit sur son autre entrée, un signal (CX - γX) fourni par un soustracteur $S'_2$. Ce soustracteur $S'_2$ reçoit en entrée le signal de précommande CX fourni par le module de calcul 7 et le signal de facteur de charge γX fourni par la centrale 1.

Le signal ΔNXC issu du sommateur $T'_2$, qui représente le facteur de charge commandé selon l'axe OX est alors appliqué à la fois au dispositif de pilotage 35 ainsi qu'à un dispositif 36 de commande des gaz du système de pilotage 21.

Le dispositif 36 élabore les commandes à appliquer à la manette des gaz, et/ou vers un directeur de vol correspondant, en fonction des signaux ΔNZC, ΔNXC et de la vitesse de tangage Q.

De même, le circuit 13 comprend un module d'intégration 27 qui fournit, à partir du facteur de charge γY, une valeur estimée

$$\widehat{\Delta VY}$$

de la vitesse latérale de l'avion, d'une part, à un second module d'intégration 28 et à l'une des entrées d'un soustracteur $S''_1$. Ce soustracteur $S''_1$ reçoit sur son autre entrée un signal de précommande de vitesse ΔVYpc engendré par un circuit de précommande 30 initialisé par la porte ET 9.

Le signal

$$\widehat{\Delta Y}$$

produit par le module 23 est appliqué à l'une des deux entrées d'un soustracteur 29 qui reçoit par son autre entrée un signal ΔYpc de précommande de position latérale de l'avion par rapport à la charge 3.

Le signal d'écart produit par le soustracteur 29, amplifié par un amplificateur $K''_1$ est additionné (sommateur $T''_1$) au signal d'écart engendré par le soustracteur $S''_1$.

Le signal résultant de cette addition est appliqué, après amplification dans un amplificateur $K''_2$, à l'entrée d'un sommateur $T''_2$ qui reçoit sur son autre entrée un signal $(CX - \gamma Y)$ fourni par un soustracteur $S''_2$ qui reçoit en entrée le signal de précommande CY fourni par le module de calcul 8 et le facteur de charge γY fourni par la centrale 1.

Le signal ΔNYC issu du sommateur $T''_2$ qui représente le facteur de charge commandé selon l'axe OY est alors appliqué au dispositif de commande des gouvernes de direction et de roulis 37 du système de pilotage 21 et/ou des directeurs de vol correspondants. Les signaux de commande fournis par ce dispositif 37 sont calculés à partir du facteur de charge commandé ΔNYC et des valeurs des vitesses de lacet R et de roulis P.

Bien entendu, l'invention pourra en outre faire intervenir un dispositif de détection, par exemple optique (bloc 38), permettant de déterminer les coordonnées X', Y' et Z' de la charge par rapport à l'avion pendant la phase de sustentation libre. Ces coordonnées pourront être respectivement appliquées aux soustracteurs 17, 24, 29, (flèches en traits interrompus) en remplacement (ou, éventuellement, en combinaison) des signaux fournis par les modules d'intégration 15, 23, 28. Elles pourront également servir au recalage périodique des modules d'intégration 15, 23 et 28.

## Revendications

1. Procédé permettant de soumettre une charge (3) portée par un aérodyne, à une microgravité, ce procédé impliquant un pilotage de l'aérodyne selon une séquence comprenant au moins les phases suivantes :
   - mise de l'aérodyne en palier stabilisé à sa vitesse maximale opérationnelle,
   - réalisation d'une ressource à facteur de charge vertical maximal,
   - réalisation d'une injection, lorsque l'aérodyne atteint une assiette de tangage déterminée, cette injection étant effectuée à facteurs de charge vertical, longitudinal et latéral nuls,

   cette séquence étant effectuée de manière à ce que l'aérodyne suive une trajectoire balistique théoriquement parabolique, et que la charge (3) soit désolidarisée de l'aérodyne de manière à ce qu'à la suite de l'injection, elle puisse suivre une trajectoire parabolique indépendante de celle de l'aérodyne,

   caractérisé en ce qu'il consiste à déterminer l'écart entre la position de la charge et celle de l'aérodyne, et à piloter l'aérodyne de manière à maintenir cet écart à une valeur déterminée fixe ou variable dans le temps au cours de ladite trajectoire parabolique.

2. Procédé selon la revendication 1, caractérisé en ce que la détermination de la position relative de l'avion par rapport à la charge est effectuée à partir des facteurs de charge avion γZ, γX, γY mesurés à l'endroit où était posée la charge (3) au cours des phases précédant la sustentation libre.

3. Procédé selon la revendication 2, caractérisé en ce que la susdite estimation s'effectue par une double intégration de chacun desdits facteurs de charge γZ, γX, γY.

4. Procédé selon la revendication 3, caractérisé en ce que la susdite double intégration est assurée au moyen de deux cellules d'intégration successives (14, 15 - 22, 23 - 27, 28) initialisées à l'instant où la charge (3) entre en sustentation libre et entame sa trajectoire parabolique indépendamment de celle de l'aérodyne.

**5.** Procédé selon la revendication 1, caractérisé en ce que la détermination de la position de l'aérodyne par rapport à la position de la charge (3) est assurée par un dispositif de mesure (38) permettant de localiser la charge (3) à l'intérieur de l'aérodyne.

**6.** Procédé selon l'une des revendications précédentes, caractérisé en ce qu'il comprend en vue d'effectuer le pilotage de l'aérodyne :
- la détermination de la position de l'aérodyne par rapport à la position de la charge,
- le calcul de l'écart entre la position ainsi déterminée et une valeur de précommande de position de l'aérodyne par rapport à la charge,
- la correction en fonction de cet écart de la précommande de vol appliquée au système de vol de l'aérodyne pour effectuer les susdites phases de pilotage du vol parabolique.

**7.** Dispositif pour la mise en oeuvre du procédé selon l'une des revendications précédentes, caractérisé en ce qu'il comprend une centrale accélérométrique (1) placée sur un support (2) du fuselage de l'aérodyne à l'endroit où est placée la charge (3), ainsi que des moyens de détection (4) de l'instant où ladite charge s'écarte du plancher (2), en ce que les signaux représentatifs des facteurs de charge $\gamma Z$, $\gamma X$, $\gamma Y$ vertical longitudinal et transversal, de l'aérodyne, qui sont fournis par la centrale (1) sont transmis à trois circuits respectifs (11, 12, 13) comprenant chacun un ensemble formé de deux cellules d'intégration (14, 15 - 22, 23 - 27, 28) disposées en série, cet ensemble étant connecté par sa sortie à un soustracteur (17, 24, 29) dont la deuxième entrée reçoit un signal de précommande de la position de l'aérodyne relativement à la charge, en ce que la sortie de ce soustracteur (17, 24, 29) est reliée à l'entrée d'un sommateur $T_1$, $T'_1$, $T''_1$ qui reçoit sur son autre entrée un signal de précommande de vol (CZ - $\gamma Z$), (CX - $\gamma X$), (CY - $\gamma Y$) permettant à l'aérodyne d'effectuer les différentes phases du vol parabolique, et en ce que la sortie dudit sommateur $T_2$, $T'_2$, $T''_2$ est connectée au système de pilotage (21) de l'aérodyne.

**8.** Dispositif selon la revendication 7, caractérisé en ce que les susdits modules d'intégration (14, 15 - 22, 23 - 27, 28) sont initialisés par un signal émanant d'une porte ET (9) dont l'une des entrées est connectée aux susdits moyens de détection (4) et dont l'autre entrée est connectée à un dispositif (10) apte a détecter le passage à zéro du facteur de charge vertical $\gamma Z$ de l'aérodyne déterminé par la susdite centrale accélérométrique (1).

**Claims**

**1.** Method enabling the subjecting of a load (3), carried by an aerodyne, to a microgravity, said method implying a piloting of the aerodyne according to a sequence comprising at least the following phases:
- bringing the aerodyne to stabilized level flight at its maximum operational speed,
- performance of straight line flight at the maximum vertical load factor,
- performance of an injection, when the aerodyne reaches a predetermined pitch trim, said injection being performed with zero vertical, longitudinal and lateral load factors,

said sequence being conducted in such a way that the aerodyne follows a theoretically parabolic ballistic trajectory, and that the load (3) is disunited from the aerodyne in such a way that, subsequent to the injection, it can follow a parabolic trajectory independent of that of the aerodyne, characterized in that it consists in determining the variance between the position of the load and that of the aerodyne, and in piloting the aerodyne so as to maintain this variance at a predetermined value, that is fixed or variable over time, during said parabolic trajectory.

**2.** Method according to claim 1, characterized in that the determining of the relative position of the aircraft in relation to the load is carried out from plane load factors $\gamma Z$, $\gamma X$, $\gamma Y$ measured at the position of the load (3) during the phases preceding the free floating.

**3.** Method according to claim 2, characterized in that the above-mentioned estimation is performed by a double integration of each of said load factors $\gamma Z$, $\gamma X$, $\gamma Y$.

**4.** Method according to claim 3, characterized in that the above-mentioned double integration is ensured by means of two successive integration cells (14, 15 - 22, 23 - 27, 28) initialized at the instant the load (3) enters into free floating and begins its parabolic trajectory independently of that of the aerodyne.

**5.** Method according to claim 1, characterized in that the determining of the position of the aerodyne in relation to the position of the load (3) is ensured by a measurement device (38) enabling the load (3) to be located inside the aerodyne.

6. Method according to any one of the previous claims, characterized in that it comprises, with a view to performing piloting of the aerodyne:
   - the determining of the position of the aerodyne in relation to the position of the load,
   - the computing of the variance between the position thus determined and a position precommand value of aerodyne in relation to the load,
   - the correcting, as a function of this variance with the flight precommand applied to the flight system, of the aerodyne for performing the above-mentioned piloting phases of the parabolic flight.

7. Device for implementing the method according to any one of the previous claims, characterized in that it comprises an accelerometric unit (1) placed on a support (2) of the fuselage of the aerodyne at the position where the load (3) is placed, as well as means for detection (4) of the instant at which said load (3) deviates from the floor (2), and in that the signals representative of the vertical, longitudinal and transversal load factors $\gamma Z$, $\gamma X$, $\gamma Y$ of the aerodyne, which are supplied by the unit (1), are transmitted to three respective circuits (11, 12, 13) each comprising a set formed of two integration cells (14, 15 - 22, 23 - 27, 28) arranged in series, this set being connected by its output to a subtracter (17, 24, 29) of which the second input receives a signal precommanding the position of the aerodyne in relation to the load, in that the output of this subtracter (17, 24, 29) is connected to the input of a summing integrator $T_1$, $T'_1$, $T''_1$ which receives, at its other input, a flight precommand signal (CZ-$\gamma Z$), (CX-$\gamma X$), (CY-$\gamma Y$) enabling the aerodyne to perform the different parabolic flight phases, and in that the output of said summing integrator $T_2$, $T'_2$, $T''_2$ is connected to the piloting system (21) of the aerodyne.

8. Device according to claim 7, characterized in that the above-mentioned integration modules (14, 15 - 22, 23 - 27, 28) are initialized by a signal coming from an AND gate (9) of which one of the inputs is connected to the above-mentioned detecting means (4) and of which the other input is connected to a device (10) capable of detecting the moving to zero of the vertical load factor $\gamma Z$ of the aerodyne determined by the above-mentioned accelerometric unit (1).

**Patentansprüche**

1. Verfahren, welches es ermöglicht, eine von einem Flugzeug getragene Last (3) einer Mikroschwerkraft zu unterwerfen, wobei besagtes verfahren die Steuerung des Flugzeuges gemäss einer Abfolge mit mindestens den folgenden Phasen einschliesst :
   - das Flugzeug wird bei grösstmöglicher Fluggeschwindigkeit, auf eine ebene, stabilisierte Flugbahn gebracht,
   - das Abfangen des Flugzeuges bei grösstmöglichem senkrechtem Belastungsfaktor,
   - Ausführung einer Injektion, wenn das Flugzeug auf eine bestimmte Nickschwingung getrimmt ist, wobei besagte Injektion bei einem Senkrecht-, Längs- und Seitenbelastungsfaktor Null ausgeführt wird
   und besagte Abfolge so ausgeführt wird, dass das Flugzeug auf einer in der Theorie parabelförmigen Bahn fliegt und die Last (3) vom Flugzeug abgehoben wird, sodass sie nach der Injektion einer vom Flugzeug unabhängigen Parabelbahn folgen kann,
   dadurch gekennzeichnet, dass es darin besteht, die Abweichung zwischen der Position der Last und der des Flugzeuges zu bestimmen und das Flugzeug so zu fliegen, dass besagte Abweichung während der Verfolgung der Parabelbahn auf einem bestimmten festen oder im Laufe der Zeit veränderlichen Wert gehalten wird.

2. Verfahren nach Anspruch 1,
   dadurch gekennzeichnet, dass die Bestimmung der relativen Position des Flugzeuges im Verhältnis zur Last ausgehend von den Flugzeugsbelastungsfaktoren $\gamma Z$, $\gamma X$, $\gamma Y$ ausgeführt wird, die da gemessen werden, wo sich die Last (3) im Laufe der Phasen vor dem freien Schweben befand.

3. Verfahren nach Anspruch 2,
   dadurch gekennzeichnet, dass besagte Schätzung durch eine doppelte Integrierung eines jeden der besagten Belastungsfaktoren $\gamma Z$, $\gamma X$, $\gamma Y$ erfolgt.

4. Verfahren nach Anspruch 3,
   dadurch gekennzeichnet, dass die besagte doppelte Integrierung durch zwei aufeinanderfolgende Integrierzellen (14, 15 - 22, 23 - 27, 28) erfolgt, die in dem Augenblick initialisiert werden, wo die Last (3) frei schwebend wird und ihre Parabelbahn unabhängig von der des Flugzeuges beginnt.

5. Verfahren nach Anspruch 1, dadurch gekennzeichnet, dass die Bestimmung der Flugzeugposition im Verhältnis zur Position der Last (3) von einer Messvorrichtung (38) ausgeführt wird, welche es ermöglicht, die Last (3) innerhalb des Flugzeuges aufzufinden.

6. Verfahren nach einem der vorhergehenden Ansprüche, dadurch gekennzeichnet, dass es, zur Steuerung des Flugzeuges, einschliesst :
   - die Bestimmung der Flugzeugposition im Verhältnis zur Position der Last,
   - die Berechnung der Abweichung zwischen der so bestimmten Position und einem Flugzeugspositionsvorsteuerwert im Verhältnis zur Last,
   - die Korrektur, je nach der besagten Abweichung, der an das Flugsystem des Flugzeuges abgegebenen Vorsteuerung, um die besagten Steuerphasen des Parabelfluges auszuführen.

7. Vorrichtung zur Durchführung des Verfahrens nach einem der vorhergehenden Ansprüche, dadurch gekennzeichnet, dass es eine auf einen Träger (2) des Flugzeugrumpfes montierte Beschleunigungsmesszentrale (1) aufweist, da wo sich die Last (3) befindet, sowie Mittel (4), welche den Augenblick erfassen, wo besagte Last sich vom Boden (2) abhebt, dass die für die Senkrecht-, Längs- und Querbelastungsfaktoren $\gamma Z$, $\gamma X$, $\gamma Y$ des Flugzeuges repräsentativen, von der Zentrale (1) abgegebenen, Signale an drei jeweilige Schaltungen (11, 12, 13) übertragen werden, die jeweils eine, aus zwei in Reihe angeordneten Integrierzellen (14, 15 - 22, 23 - 27, 28) gebildete, Einheit aufweisen und besagte Einheit durch ihren Ausgang an ein Subtrahierglied (17, 24, 29) angeschlossen ist, dessen zweiter Eingang ein Vorsteuersignal für die Position des Flugzeuges im Verhältnis zur Last erhält, dass der Ausgang des Subtrahiergliedes (1, 24, 29) an den Eingang eines Summators ($T_1$, $T'_1$, $T''_1$) angeschlossen ist, der an seinem anderen Eingang ein Flugvorsteuersignal (CZ - $\gamma Z$), (CX - $\gamma X$), (CY - $\gamma Y$) erhält, das es dem Flugzeug erlaubt, die verschiedenen Phasen des Parabelfluges auszuführen, und dass der Ausgang des besagten Summators ($T_2$, $T'_2$, $T''_2$) an das Steuersystem (21) des Flugzeuges angeschlossen ist.

8. Vorrichtung nach Anspruch 7, dadurch gekennzeichnet, dass die besagten Integriermodule (14, 15 - 22, 23 - 27, 28) von einem Signal initialisiert werden, das von einem UND-gate erzeugt wird, dessen einer Eingang an besagte Erfassungsmittel (4) angeschlossen ist und dessen anderer Eingang an eine Vorrichtung (10) angeschlossen ist, welche den Übergang auf Null des von der besagten Beschleunigungsmesszentrale (1) bestimmten senkrechten Belastungsfaktors $\gamma Z$ des Flugzeuges erfasst.

FIG.1

EP 0 486 346 B1

FIG.2